# EUROPEAN PATENT APPLICATION

(11) **EP 2 930 324 A1**
(43) Date of publication of application: **14.10.2015**
(21) Application number: 15150291.1
(22) Date of filing: 16.09.2009
(51) Int. Cl.: F01N 3/08, F01N 3/02, F01N 3/24, F01N 3/20, F01N 3/022, F01N 3/035

(54) **Exhaust emission purifying apparatus**

(30) Priority: 19.12.2008 JP 2008323146
(62) Divisional of application: 09833263.8
(71) Applicant: UD Trucks Corporation, Saitama 362-8523 (JP)
(72) Inventor: Masaki, Nobuhiko, Ageo-shi, 362-8523 (JP); Hirata, Kiminobu, Ageo-shi, 362-8523 (JP); Yano, Masakazu, Ageo-shi, 362-8523 (JP)
(74) Representative: Patentanwälte Vollmann & Hemmer

(57) **Abstract**

The present invention provides an exhaust emission purifying apparatus (18). In the exhaust emission purifying apparatus, a first layer containing the ammonia adsorbent and the NOx reduction catalyst in a mixed state and a second layer containing a hydrolysis catalyst are coated in that order on a carrier surface (18A) of the catalytic converter. In a transition of an engine operation state, NOx is reduced and purified with the use of ammonia adsorbed to the ammonia adsorbent.

## Description

The present invention relates to an exhaust emission purifying apparatus which reduces and purifies nitrogen oxide (NOx) in exhaust gas with the use of ammonia generated from a urea aqueous solution by hydrolysis.

As a catalytic purification system that removes NOx contained in exhaust gas of an engine, there has been proposed an exhaust emission purifying apparatus described in Japanese Laid-open (Kokai) Patent Application Publication No. 2000-27627 (Patent Literature 1). In the exhaust emission purifying apparatus, a urea aqueous solution corresponding to an engine operation state is injection-supplied to the exhaust upstream side of a NOx reduction catalytic converter arranged in an exhaust pipe, and ammonia that is a reducing agent is generated from the urea aqueous solution by hydrolysis using exhaust heat and water vapor in exhaust gas. In the NOx reduction catalytic converter, ammonia and NOx are selectively subjected to reduction reaction, and NOx is purified to harmless water (H₂O) and nitrogen (N₂).

Patent Literature 1: Japanese Laid-open (Kokai) Patent Application Publication No. 2000-27627

In a transition of an engine operation state, since the generation of ammonia may not follow a rapid SV (spatial velocity) change, there has been an attempt to add a hydrolysis function or an ammonia adsorption function to a NOx reduction catalytic converter to enhance a NOx purification efficiency. However, even if the hydrolysis function or the ammonia adsorption function is added to the NOx reduction catalytic converter, it may not be concluded that hydrolysis for generating ammonia from a urea aqueous solution is satisfactorily carried out in a wide range of the engine operation state, and it has been a fact that the NOx purification efficiency that would be expected may not be obtained.

Thus, in view of the above related art problems, an object of the present technique is to provide an exhaust emission purifying apparatus which devises a coating structure of an ammonia adsorbent, a hydrolysis catalyst, and a NOx reduction catalyst coated on a carrier of the NOx reduction catalytic converter to thereby enhance the NOx purification efficiency.

According to a first aspect of the present technique, an exhaust emission purifying apparatus includes: a catalytic converter which reduces and purifies NOx in exhaust gas with the use of ammonia generated from a urea aqueous solution by hydrolysis; a urea aqueous solution tank which stores the urea aqueous solution therein; an injection nozzle through which the urea aqueous solution is injection-supplied to the exhaust upstream side of the catalytic converter; and a urea aqueous solution supply device which supplies the urea aqueous solution, stored in the urea aqueous solution tank, to the injection nozzle at a flow rate corresponding to an engine operation state. In the exhaust emission purifying apparatus, while an ammonia adsorbent is coated on a predetermined length portion on the exhaust inflow side of a carrier of the catalyst converter, a NOx reduction catalyst is coated on the remaining portion on the exhaust outflow side of the carrier of the catalytic converter. In a second aspect of the present technique, instead of the constitution of the first aspect, a first layer containing the ammonia adsorbent and the NOx reduction catalyst in a mixed state and a second layer containing a hydrolysis catalyst are coated in that order on a carrier surface of the catalytic converter.

According to the first aspect of the present technique, when an engine performs a steady operation, ammonia generated from the urea aqueous solution by hydrolysis is adsorbed to the ammonia adsorbent coated on the exhaust inflow side of the carrier of the catalytic converter. In a transition of the engine operation, when the generation of ammonia may not follow a rapid SV change, ammonia adsorbed to the ammonia adsorbent is released to be supplied to the NOx reduction catalyst coated on the exhaust outflow side of the carrier. Thus, even if hydrolysis for generating ammonia from the urea aqueous solution is not satisfactorily carried out, the reduction reaction between NOx and ammonia occurs in the NOx reduction catalyst, and especially a NOx purification efficiency in the transition of the engine operation state can be enhanced.

According to the second aspect of the present technique, among the urea aqueous solution injection-supplied from the injection nozzle, the urea aqueous solution that is not converted to ammonia by hydrolysis is in contact with the hydrolysis catalyst to be converted to ammonia in the second layer coated on a carrier surface of the catalytic converter. When the engine performs the steady operation, ammonia is adsorbed to the ammonia adsorbent contained in the first layer. In the transition of the engine operation state, when the generation of ammonia may not follow a rapid SV change, ammonia adsorbed to the ammonia adsorbent is released to be supplied to the NOx reduction catalyst contained in the same first layer. Thus, the NOx purification efficiency can be enhanced in the transition of the engine operation state.
FIG. 1 is a schematic configuration view of an exhaust emission purifying apparatus to which the present technique is to be applied;
FIG. 2 is an explanatory view of a method of coating an ammonia adsorbent and a NOx reduction catalyst;
FIG. 3 is an explanatory view of the operation and effect of a NOx catalytic converter according to a first embodiment;
FIG. 4 is an explanatory view of the operation and effect of a NOx catalytic converter according to a second embodiment; and
FIG. 5 is an explanatory view of experimental data showing enhancement of a NOx purification efficiency.

Hereinafter, the present technique will be described in detail referring to the attached drawings.

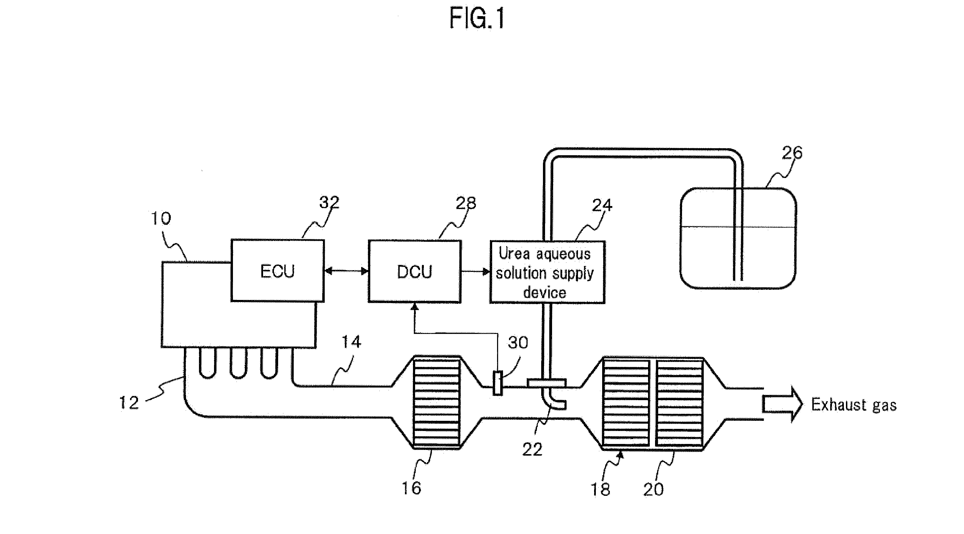

FIG. 1 shows a schematic configuration of an exhaust emission purifying apparatus to which the present technique is to be applied.

In an exhaust pipe 14 connected to an exhaust manifold 12 of an engine 10, a nitrogen oxidation catalytic converter 16 which oxidizes nitric oxide (NO) to nitrogen dioxide (NO₂), a NOx reduction catalytic converter 18 which reduces and purifies NOx in exhaust gas with the use of ammonia, and an ammonia oxidation catalytic converter 20 which oxidizes ammonia passed through the NOx reduction catalytic converter 18 are arranged in this order along an exhaust gas flow direction.

An injection nozzle 22 which injection-supplies a urea aqueous solution to the exhaust upstream side of the NOx reduction catalytic converter 18 is attached to the exhaust pipe 14 located between the nitrogen oxidation catalytic converter 16 and the NOx reduction catalytic converter 18. The urea aqueous solution stored in a urea aqueous solution tank 26 is supplied to the injection nozzle 22 through a urea aqueous solution supply device 24 having an electric pump and a flow rate control valve which are incorporated therein.

The urea aqueous solution supply device 24 is electronically controlled by a reducing agent dosing control unit (hereinafter referred to as "DCU (Dosing Control Unit)") 28 with a built-in computer in order to supply the urea aqueous solution stored in the urea aqueous solution tank 26 to the injection nozzle 22 at the flow rate corresponding to an engine operation state. The DCU 28 receives an input of an exhaust temperature signal from a temperature sensor 30 attached to the exhaust pipe 14 located between the nitrogen oxidation catalytic converter 16 and the injection nozzle 22 and, at the same time, receives an input of an engine rotation speed signal and a fuel injection flow rate signal from an engine control unit (ECU) 32 electronically controlling the engine 10. The DCU 28 calculates a urea aqueous solution dosing flow rate corresponding to an exhaust temperature, an engine rotation speed, and a fuel injection flow rate in accordance with a control program stored in a ROM (Read Only Memory) and the like, and controls the electric pump and the flow rate control valve of the urea aqueous solution supply device 24 based on the calculation result.

In the exhaust emission purifying apparatus, the urea aqueous solution injection-supplied from the injection nozzle 22 in response to the engine operation state is hydrolyzed by utilizing exhaust heat and water vapor in exhaust gas, so that ammonia is generated. In the NOx reduction catalytic converter 18, ammonia and NOx in exhaust gas are selectively subjected to reduction reaction, and NOx is purified to harmless H₂O and N₂. At that time, in order to enhance the NOx purification efficiency in the NOx reduction catalytic converter 18, NO is oxidized to NO₂ in the nitrogen oxidation catalytic converter 16, and the ratio between NO and NO₂ in exhaust gas is improved to the ratio appropriate for the reduction reaction. On the other hand, since ammonia having passed through the NOx reduction catalytic converter 18 is oxidized by the ammonia oxidation catalytic converter 20 arranged at the exhaust downstream side of the NOx catalytic converter 18, the ammonia is prevented from being emitted as it is into the atmosphere.

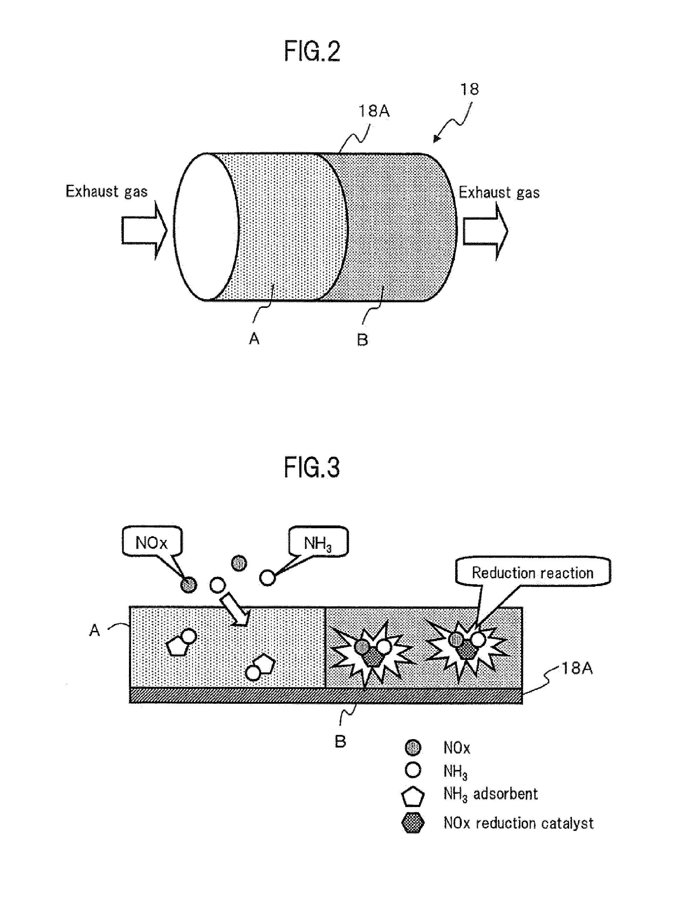

In order to further enhance the NOx purification efficiency in the NOx reduction catalytic converter 18, as shown in FIG. 2, while an ammonia adsorbent A is coated on a predetermined length portion on the exhaust inflow side of a carrier 18A having a honeycomb structure, a NOx reduction catalyst B is coated on the remaining portion on the exhaust outflow side of the carrier 18A. Although applicable examples of the ammonia adsorbent A include an arbitrary compound having a strong solid acid, it is preferable to use ZSM-5, mordenite, β, and so on, which are a kind of zeolite having a relatively high ammonia adsorption ability. As the NOx reduction catalyst B, a NOx reduction catalyst mainly composed of titanium oxide and vanadium oxide or tungsten oxide can be used as described in Japanese Laid-open (Kokai) Patent Application Publication Nos. H07-275656 and H 10-235206, for example.

Each component used as the ammonia adsorbent A and the NOx reduction catalyst B is regulated to have an appropriate particle diameter by a well-known mill such as a dry grinding mill or a wet grinding mill and thereafter coated on the carrier 18A. At that time, each component is mixed with a solvent such as water to be made into the form of slurry and then coated on the carrier 18A. Thereafter, the coating is subjected to drying and heat processing at a predetermined temperature to be baked. In this case, each component may contain a specific amount of a mixture of alumina and silica sol as a "binder material" enhancing adhesion with the carrier 18A.

When the engine 10 performs a steady operation, as shown in FIG. 3, ammonia generated from the urea aqueous solution by hydrolysis is adsorbed to the ammonia adsorbent A coated on the exhaust inflow side of the carrier 18A. In a transition of the engine operation state, when the generation of ammonia may not follow a rapid SV change, ammonia adsorbed to the ammonia adsorbent A is released to be supplied to the NOx reduction catalyst B coated on the exhaust outflow side of the carrier 18A. Thus, even if hydrolysis for generating ammonia from the urea aqueous solution is not satisfactorily carried out, the reduction reaction between NOx and ammonia occurs in the NOx reduction catalyst B, and in particular, the NOx purification efficiency in the transition of the engine operation state can be enhanced. Accordingly, in a wide range of the engine operation state, the NOx purification efficiency can be enhanced.

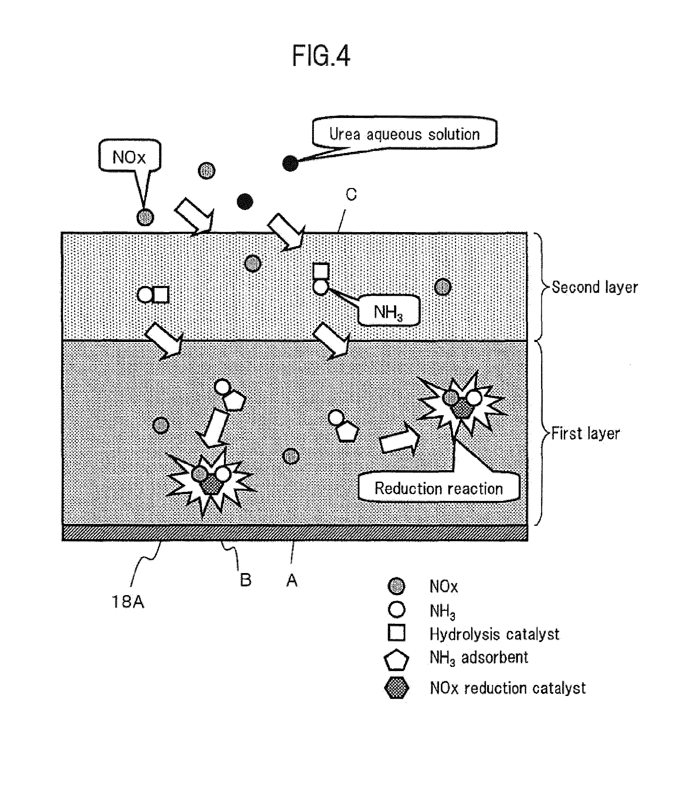

In order to further enhance the NOx purification efficiency in the NOx reduction catalytic converter 18, instead of the configuration of FIG. 2, as shown in FIG. 4, a first layer containing the ammonia adsorbent A and the NOx reduction catalyst B in a mixed state and a second layer containing a hydrolysis catalyst C may be coated in this order on a surface of the carrier 18A. As described in Japanese Laid-open (Kokai) Patent Application Publication No. 2002-514495, as the hydrolysis catalyst C, titanium dioxide containing vanadium pentoxide, aluminum oxide, and/or silicon oxide can be used, for example. However, it is preferable to particularly use titanium dioxide containing vanadium pentoxide in an amount of 0.02 to 1.3 wt%. Since the method of coating the first layer and the second layer on the surface of the carrier 18A is similar to that shown in FIG. 2, the description will not be repeated here.

Among the urea aqueous solution injection-supplied from the injection nozzle 22, the urea aqueous solution that is not converted to ammonia by hydrolysis is in contact with the hydrolysis catalyst C to be converted to ammonia in the second layer coated on the surface of the carrier 18A. When the engine 10 performs the steady operation, ammonia is adsorbed to the ammonia adsorbent A contained in the first layer. In the transition of the engine operation state, when the generation of ammonia may not follow the rapid SV change, ammonia adsorbed to the ammonia adsorbent A is released to be supplied to the NOx reduction catalyst B contained in the same first layer. Thus, even if hydrolysis for generating ammonia from the urea aqueous solution is not satisfactorily carried out, the reduction reaction between NOx and ammonia occurs in the NOx reduction catalyst B, and in particular, the NOx purification efficiency in the transition of the engine operation state can be enhanced. Accordingly, in a wide range of the engine operation state, the NOx purification efficiency can be enhanced.

In the above described embodiments, although the ammonia adsorbent A, the NOx reduction catalyst B, and the hydrolysis catalyst C are coated on the carrier 18A having a honeycomb structure, they may be coated on a diesel particulate filter (DPF) which collects and removes a particulate matter (PM) in exhaust gas. In this case, the particle diameter and coating amount of each component of the ammonia adsorbent A, the NOx reduction catalyst B, and the hydrolysis catalyst C are preferably previously optimized in actual use of the DPF taking into the fact that a pressure loss occurs due to the collection of the PM.

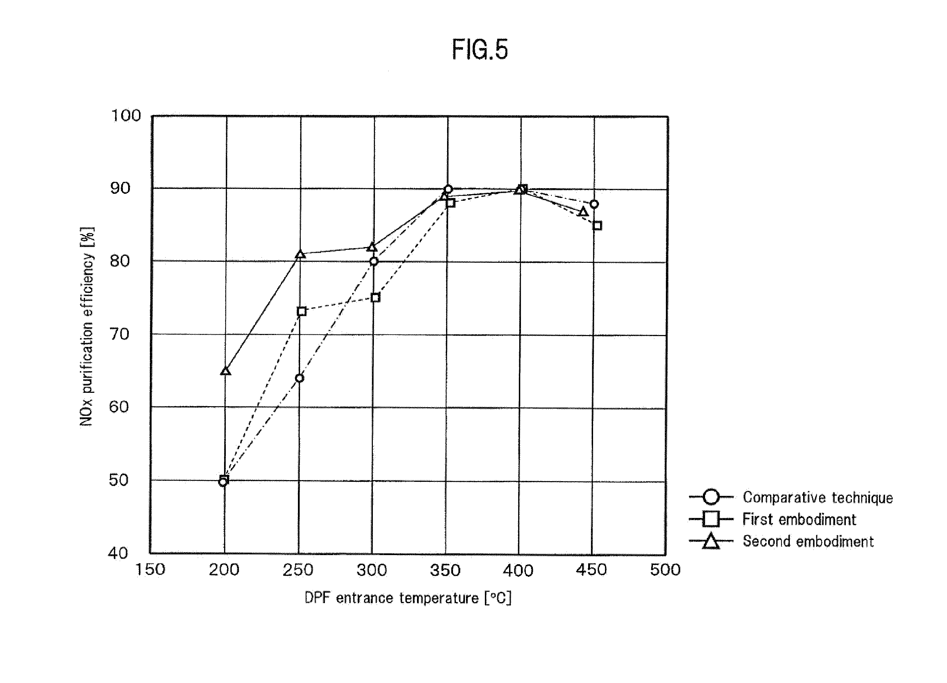

In an exhaust emission purifying apparatus in which the nitrogen oxidation catalytic converter, the DPF, and the ammonia oxidation catalytic converter are arranged in series, each NOx purification efficiency is detected in JE05 mode in a case in which the NOx reduction catalyst B is coated to the DPF (comparative technique), a case in which the coating is applied as shown in FIG. 2 (first embodiment), and a case in which the coating is applied as shown in FIG. 4 (second embodiment). As shown in FIG. 5, it can be confirmed that the NOx purification efficiency is enhanced in a wide range of an engine operation region relative to the comparative technique. As seen in the same drawing, the NOx purification efficiency is significantly enhanced, in particular, in the region where a DPF entrance temperature is low.

### List of reference numerals

- 18: - NOx reduction catalytic converter
- 18A: - Carrier
- 22: - Injection nozzle
- 24: - Urea aqueous solution supply device
- 26: - Urea aqueous solution tank
- A: - Ammonia adsorbent
- B: - NOx reduction catalyst
- C: - Hydrolysis catalyst

## Claims

1. An exhaust emission purifying apparatus comprising:
a catalytic converter which reduces and purifies nitrogen oxide in exhaust gas with the use of ammonia generated from a urea aqueous solution by hydrolysis;
a urea aqueous solution tank which stores the urea aqueous solution therein;
an injection nozzle through which the urea aqueous solution is injection-supplied to the exhaust upstream side of the catalytic converter; and
a urea aqueous solution supply device which supplies the urea aqueous solution stored in the urea aqueous solution tank, to the injection nozzle at a flow rate corresponding to an engine operation state,
wherein a first layer containing an ammonia adsorbent and a nitrogen oxide reduction catalyst in a mixed state and a second layer containing a hydrolysis catalyst are coated in that order on a carrier surface of the catalytic converter.

2. The exhaust emission purifying apparatus according to claim 1, wherein the carrier is a diesel particulate filter.
